# EUROPEAN PATENT SPECIFICATION

(11) **EP 2 447 150 B1**
(45) Date of publication and mention of the grant of the patent: **19.12.2012**
(21) Application number: 11186635.6
(22) Date of filing: 26.10.2011
(51) Int. Cl.: B64C 1/14

(54) **Surround for an opening made in an aircraft panel, and method of fitting it**
Encadrement d'une ouverture réalisée dans un panneau d'un aéronef et un procédé de montage dudit encadrement
Rahmen für eine Öffnung in einem Flugzeugpanel, und ein Montageverfahren für diesen Rahmen

(30) Priority: 26.10.2010 FR 1058792
(43) Date of publication of application: 02.05.2012
(73) Proprietor: Airbus Operations (S.A.S.), 31060 Toulouse (FR)
(72) Inventor: Fort, Frédéric, 31180 Saint Genies Bellevue (FR); Gauthie, Laurent, 31170 Tournefeuille (FR)
(74) Representative: Gicquel, Olivier Yves Gérard

(56) References cited:
- WO-A1-2005/115837
- DE-A1-102006 053 967

## Description

The present invention relates to the design of the surround for an opening made in a panel of an aircraft and to the method of fitting said surround.

The structure of an aircraft generally comprises several panels through which are made openings that are closed off by elements that may or may not be transparent.

WO 2005/115837 shows a surround for an opening made in a panel of an aircraft as recited in the preamble of claim 1.

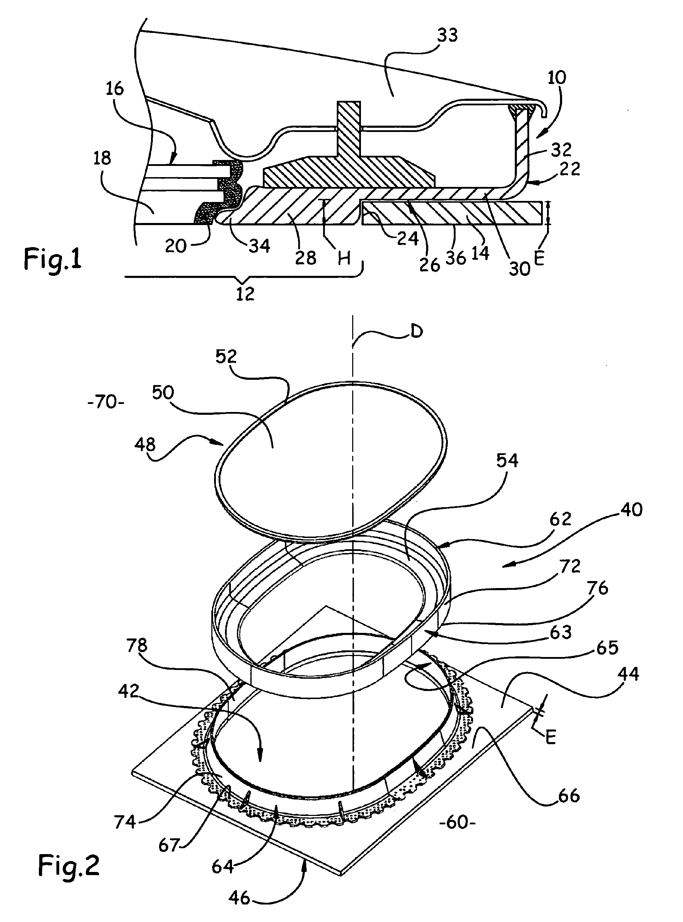

Figure 1 illustrates, in cross section, a known arrangement of the surround 10 for an opening 12 made in an aircraft fuselage panel 14 and fitted with a window 16.

Thus, according to this prior art, the surround 10 used to attach the window-pane 18/window-sill 20 assembly to the said opening 12 consists of a single surround component 22 in the form of an angle section straddling the edge 24 of the opening 12.

More specifically, the base 26 of the said component 22 has a heel 28 that fits into the opening 12, and a horizontal part 30 pressed against the edge 24 of the opening 12 and fixed to the panel 14.

The heel 28 then comprises a lip 34 extending towards the centre of the opening 12 to support the said window-pane 18/window-sill 20 assembly, while a retaining device 33, that rests against a vertical extension 32 of the horizontal part 30, clamps the said assembly from the other side.

In order to maintain the aerodynamic qualities of the fuselage, the said surround 10 supporting the window 16 has to lie in the continuity of the aerodynamic surface.
In order to achieve this, the height H of the heel 28 of the component 22 has to be substantially equal to the thickness E of the panel 14 so that the said heel lies flush with the exterior surface 36 of the panel 14.

Thus the height H of the heel 28 of the component 22 is dependent on the thickness E of the panel 14.

Now, from one aircraft to another, from one generation of the same aircraft to another, from one part of the structure of an aircraft to another, and also from one opening to another within the same aircraft, the thickness of the said panels is liable to vary.

Hence, in order to prevent the surrounds of the various openings in an aircraft being offset towards the outside of the aircraft, it is necessary to have a large number of families of surround components 22 with heels 28 of different heights in order to maintain the aerodynamic continuity of the fuselage. With this prior-art design of surround, a great many different surround components 22 have to be assigned part numbers and used to build an aircraft.

To illustrate the scale of the problem, certain aircraft need up to twenty-one families of surrounds.

In addition, in the case of an aircraft manufacturer, the number of different surround component 22 part numbers increases correspondingly with the number of models of aircraft.

Thus, in this prior-art design of surround 10 the dependency of the height H of the heel 28 of the surround component 22 on the thickness E of the panel 14 is a major disadvantage that prevents any marrying of one and the same surround component 22 with the various openings of one and the same model of aircraft or different models of aircraft.

The present invention aims to alleviate the disadvantages of the prior art.

According to a first objective, the invention aims to propose a surround design that can be married with different thicknesses of panels, namely that allows the flushness of the said surround to be adjusted with respect to the exterior surface, notably the aerodynamic surface, of the said panels.

To achieve this, the invention proposes a surround for an opening made in a panel of an aircraft, notably a fuselage panel of the said aircraft, the said panel comprising at least one exterior surface, the said surround being fixable to the said panel, forming an interface for fitting a closing-off device, and comprising at least one lip extending towards the centre of the opening, the said lip supporting the closing-off device and having at least one external face interposed between the exterior surface of the panel and the said closing-off device, and the said surround is made of at least two independent components joined together, a first component comprising the said lip and a second component fixable to the panel, characterized in that one of the components is transversely split along its entire section.

According to another objective, the invention aims to provide a method of fitting which makes the said surround easier to use and to marry the openings made in panels of different thicknesses.

For preference, prior to being joined together, the first and second components slide relative to one another in the direction of the thickness of the panel.

Thus, and still before the said components are joined together, it is possible to adjust the position and therefore the flushness of the external face of the first component with respect to the exterior surface of the panel.

Thus, because the two-part design of the surround according to the invention is no longer dependent on the thickness of the panel, identical surround components can be used on openings made in panels of different thicknesses, thus making it possible greatly to reduce the number of families of surround needed for building an aircraft, especially in the case of an aircraft manufacturer who makes different models of aircraft.

According to another advantage, the invention aims to propose a surround design that allows the functions of supporting the window pane and window sill to be separated from the functions of mechanically stabilizing the edge of the opening made in the panel.

To achieve this, in the surround according to the invention, the first component performs the function of supporting the closing-off device, such as a blanking plate or a window pane, while the second component provides the mechanical stabilizing of the edge of the opening.

Thus, the mechanical properties of each of the said components can be optimized separately.

Further features and advantages will emerge from the following description of the invention, which description is given solely by way of example and with reference to the attached drawings in which:
- Figure 1 is a view in cross section of a surround according to the prior art,
- Figure 2 is an exploded perspective view of the two components of a surround according to the invention before they are joined together;
- Figures 3A and 3B illustrate the adaptability of the surround according to the invention to suit panels of different thicknesses.

In one embodiment illustrated in Figure 2, the surround 40 according to the invention is to be fitted to an opening 42 of oblong shape made in the substantially planar panel 44 of an aircraft.

The panel 44 is a fuselage panel the exterior surface 46 of which corresponds to the aerodynamic surface of the aircraft and the said surround forms an interface for fitting a closing-off device 48 in the form of at least one window pane 50 equipped with a periphery seal 52 to form a window.

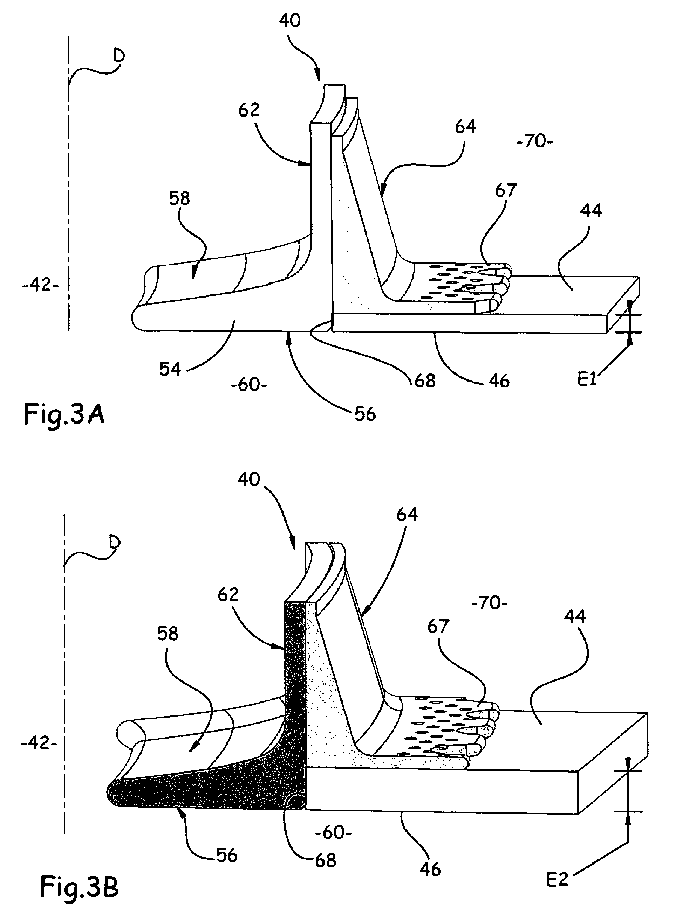

As illustrated in Figures 2, 3A and 3B, the surround 40 substantially continuously surrounds the entire circumference of the opening 42, is fixed to the panel 44, and comprises at least one lip 54 extending towards the centre of the opening 42, the said lip 54 supporting the window 48 and being able to react the cabin pressurizing forces applied to the said window.

In greater detail, the said lip has at least one external face 56 interposed between the exterior surface 46 of the panel and the window 48, and also has an internal face 58 against which the window pane 50 and its peripheral seal 52 rest.

The internal face 58 is inclined towards the centre of the opening 42 and towards the outside 60 of the panel to make the said window pane easier to position and the said seal easier to compress.

The external face 56 of the said lip extends substantially in the continuation of the exterior surface 46 of the panel in order to maintain the aerodynamic continuity of the fuselage.

The surround 40 is made of at least two independent components joined together, a first component 62 comprising the said lip 54 and a second component 64 fixed to the panel, notably by rivets.

More specifically, because the said panel also comprises an interior surface 66, the second component 64 comprises a base 67 fixed to the said interior surface at the edge 68 of the opening 42.

Advantageously, the said second component 64 thus acts as a reinforcement mechanically stabilizing the said edge 68 of the opening as the fuselage flexes and therefore as the panel 44 deforms.

The base 67 may be serrated and perforated to save weight.

In the remainder of the description, the panel 44 has a thickness E, and an axis D, indicating the direction of the said thickness is substantially perpendicular to the said panel.

To make it possible to adjust the flushness of the external face 56 of the first component 62 with respect to the exterior surface 46 of the panel, and before the two components (62, 64) of the surround are joined together, the said first component 62 is mounted so that it can slide with respect to the second component 64.

To do this, the first component 62 comprises at least one gliding surface 63 and the second component 64 comprises at least one gliding surface 65, the said gliding surfaces (63, 65) being capable of sliding one against the other in the direction D perpendicular to the panel.

In a preferred embodiment of the invention, the first component 62 comprises at least one wall 72 extending in the direction D and towards the inside 70 of the panel, and the second component 64 comprises at least one wall 74 extending in the direction D and towards the inside 70 of the panel, the said walls (72, 74) being back to back and of substantially identical height.

The wall 72 is mounted on the inside of the wall 74, the internal face 78 of the wall 74 substantially corresponding to the gliding surface 65, and the external face 76 of the wall 72 substantially corresponding to the gliding surface 63.

As a result, the said components (62, 64) have cross sections substantially in the shape of an L placed back to back.

Advantageously, the said walls (72, 74) also act as stiffeners increasing the moment of inertia of the surround 40 and further improving the mechanical stabilizing of the edge 68 of the opening.

Hence, before the said components (62, 64) are joined together at the said walls (72, 74) by fixing means, the external face 76 of the wall 72 glides against the internal face 78 of the wall 74.

For preference, the internal face 78 of the wall 74 lies in the continuation of or protrudes beyond the edge 68 of the opening 42, and the external face 76 of the wall 72 also slides along the said edge 68 before the said components (62, 64) are joined together. In order to avoid problems with sealing and if the method of manufacture of the said components (62, 64) so permits, the said external 76 and internal 78 faces are produced to precise dimensions with tight geometric tolerances so that there is minimal sliding clearance between them.

In addition, sealing means, such as a seal, are applied between the faces (76, 78) of the said components.

However, in another embodiment of the surround 40 according to the invention which is aimed at eliminating the clearance between the said components (62, 64), and notably if the method of manufacture is unable to achieve tight geometric tolerances, one of the components is split transversely along its entire section and additional sealing means are applied at the said slit.

For preference, and notably in the case of a closing-off device 48 in the form of a window, the lip 54 is designed so that the closing-off device 48 lies flush with the external face 56 of the first component 62 or is inset towards the inside 70 of the panel 44.

In either of the two embodiments of the surround 40 which have been described hereinabove, the first and second components (62, 64) may be made of a metal or composite.

In the case of the use of a composite, the said components (62, 64) are preferably obtained by an injection-moulding process capable of achieving tight geometric tolerances.

Again in either of the embodiments of the surround 40 which have been described hereinabove, and in order best to maintain the aerodynamic continuity of the fuselage, a method of fitting the said surround generally makes provision for the position of the first component 62 to be adjusted with respect to the second component 64 and to the panel 44 in the direction D according to the thickness E of the panel when the surround 40 is fitted and before the said components are joined together.

More specifically, the said method of fitting makes provision for the external face 56 of the first component 62 to lie flush with the exterior surface 46 of the panel 44 or to be inset towards the inside 70 of the panel.

Thus, and as illustrated by way of comparison in Figures 3A and 3B, the two same components (62, 64) of a surround according to the invention can be adapted to suit openings 42 made in panels 44 of different thicknesses (E1, E2), thus making it possible to reduce the number of part numbers needed for building each model of aircraft.

Thereafter, the said method of fitting makes provision for the position of the first component 62 with respect to the second component 64 to be adjusted according to the desired degree to which the closing-off device 48 is to be inset with respect to the exterior surface 46 of the panel 44, namely the aerodynamic surface.

To achieve this, the method of fitting the said surround 40 first of all makes provision for the second component 64 to be fixed to the panel 44, then for the first component 62 to be positioned with respect to the second according to the desired degree to which the closing-off device 48 is to be inset, before the fixing means that join the said components (62, 64) together at their respective walls (72, 74) are brought into operation.

For preference, the said fixing means are brought into operation by drilling through the two components (62, 64) together at their respective walls (72, 74) when fitting the surround onto the opening, the drillings thus obtained accepting fixing means such as screws or rivets, the said fixing means being sized and distributed in the said walls (72, 74) in such a way as best to transfer the pressure forces experienced by the window 48 and reacted by the first component 62 to the second component 64.

## Claims

1. Surround (40) for an opening (42) made in a panel (44) of an aircraft, notably a fuselage panel of the said aircraft, the said panel comprising at least one exterior surface (46), the said surround being fixable to the said panel, forming an interface for fitting a closing-off device (48), and comprising at least one lip (54) extending towards the centre of the opening (42), the said lip supporting the closing-off device (48) and having at least one external face (56) interposed between the exterior surface (46) of the panel and the said closing-off device, and the surround (40) is made of at least two independent components joined together, a first component (62) comprising the said lip (54) and a second component (64) fixable to the panel, **characterized in that** one of the components (62, 64) is transversely split along its entire section.

2. Surround (40) for an opening (42) made in a panel (44) of an aircraft according to Claim 1, **characterized in that**, before the two components (62, 64) of the surround are joined together, the said first component (62) is fitted so that it can slide with respect to the second component (64).

3. Surround (40) for an opening (42) made in a panel (44) of an aircraft according to Claim 2, **characterized in that** the first component (62) comprises at least one gliding surface (63) and the second component (64) comprises at least one gliding surface (65), the said gliding surfaces (63, 65) being capable of sliding one against the other in a direction (D) perpendicular to the panel.

4. Surround (40) for an opening (42) made in a panel (44) of an aircraft according to Claim 3, **characterized in that**, with the first component (62) comprising at least one wall (72) extending in the direction (D) and towards the inside (70) of the panel, with the second component (64) comprising at least one wall (74) extending in the direction (D) and towards the inside (70) of the panel, and with the wall (72) being mounted on the inside of the wall (74), the external face (76) of the wall (72) corresponds to the gliding surface (63), and the internal face (78) of the wall (74) corresponds to the gliding surface (65).

5. Surround (40) for an opening (42) made in a panel (44) of an aircraft according to Claim 4, **characterized in that** the internal face (78) of the wall (74) lies in the continuation of or extends beyond the edge (68) of the opening (42).

6. Method of fitting a surround (40) according to one of the preceding claims, **characterized in that** it makes provision for the position of the first component (62) to be adjusted with respect to the second component (64) and to the panel (44) in the direction (D) according to the thickness (E) of the panel when the surround (40) is being fitted and before the said components are joined together, the external face (56) of the first component (62) lying flush with the exterior surface (46) of the panel or being inset towards the inside (70) of the panel (44).

7. Method of fitting a surround (40) according to the preceding claim, **characterized in that** it makes provision for the position of the first component (62) with respect to the second component (64) to be adjusted according to the desired extent to which the closing-off device (48) is to be set in with respect to the exterior surface (46) of the panel (44).

8. Method of fitting a surround (40) according to the preceding claim, **characterized in that** it makes provision for the second component (64) to be fixed to the panel (44) and then for the first component (62) to be positioned with respect to the second component according to the desired extent to which the closing-off device (48) is to be inset, before the fixing means that join the said components (62, 64) together at their respective walls (72, 74) are brought into use.

9. Method of fitting a surround (40) according to the preceding claim, **characterized in that** the said fixing means are brought into operation by drilling through the two components (62, 64) together at their respective walls (72, 74) when fitting the surround onto the opening, the drillings obtained accepting fixing means such as screws or rivets.

## Patentansprüche

1. Rahmen (40) für eine in einem Paneel (44) eines Flugzeugs, insbesondere einem Rumpfpaneel des Flugzeugs, hergestellte Öffnung (42), wobei das Paneel wenigstens eine Außenfläche (46) umfasst, wobei der Rahmen an dem Paneel befestigt werden kann, wobei er eine Grenzfläche zum Anbringen einer Absperreinrichtung (48) bildet und wenigstens eine Lippe (54) umfasst, die sich zu der Mitte der Öffnung (42) hin erstreckt, wobei die Lippe die Absperreinrichtung (48) trägt und wenigstens eine Außenseite (56) hat, die zwischen die Außenfläche (46) des Paneels und die Absperreinrichtung geschaltet ist, und der Rahmen (40) aus wenigstens zwei unabhängigen Bestandteilen, die miteinander verbunden sind, hergestellt ist, wobei ein erster Bestandteil (62) die Lippe (54) umfasst und ein zweiter Bestandteil (64) an dem Paneel befestigt werden kann, **dadurch gekennzeichnet, dass** einer der Bestandteile (62, 64) in Querrichtung entlang seines gesamten Schnitts gespalten ist.

2. Rahmen (40) für eine in einem Paneel (44) eines Flugzeugs hergestellte Öffnung (42) nach Anspruch 1, **dadurch gekennzeichnet, dass**, bevor die zwei Bestandteile (62, 64) des Rahmens miteinander verbunden werden, der erste Bestandteil (62) so eingepasst wird, dass er in Bezug auf den zweiten Bestandteil (64) gleiten kann.

3. Rahmen (40) für eine in einem Paneel (44) eines Flugzeugs hergestellte Öffnung (42) nach Anspruch 2, **dadurch gekennzeichnet, dass** der erste Bestandteil (62) wenigstens eine Gleitfläche (63) umfasst und der zweite Bestandteil (64) wenigstens eine Gleitfläche (65) umfasst, wobei die Gleitflächen (63, 65) dazu in der Lage sind, in einer Richtung (D), senkrecht zu dem Paneel, eine gegenüber der anderen zu gleiten.

4. Rahmen (40) für eine in einem Paneel (44) eines Flugzeugs hergestellte Öffnung (42) nach Anspruch 3, **dadurch gekennzeichnet, dass**, wenn der erste Bestandteil (62) wenigstens eine Wand (72) umfasst, die sich in der Richtung (D) und zu der Innenseite (70) des Paneels hin erstreckt, wenn der zweite Bestandteil (64) wenigstens eine Wand (74) umfasst, die sich in der Richtung (D) und zu der Innenseite (70) des Paneels hin erstreckt, und wenn die Wand (72) auf der Innenseite der Wand (74) angebracht ist, die Außenseite (76) der Wand (72) der Gleitfläche (63) entspricht und die Innenseite (78) der Wand (74) der Gleitfläche (65) entspricht.

5. Rahmen (40) für eine in einem Paneel (44) eines Flugzeugs hergestellte Öffnung (42) nach Anspruch 4, **dadurch gekennzeichnet, dass** die Innenseite (78) der Wand (74) in der Fortsetzung der Kante (68) der Öffnung (42) liegt oder sich darüber hinaus erstreckt.

6. Verfahren zum Einpassen eines Rahmens (40) nach einem der vorhergehenden Ansprüche, **dadurch gekennzeichnet, dass** es Vorkehrungen trifft, damit die Position des ersten Bestandteils (62) in Bezug auf den zweiten Bestandteil (64) und auf das Paneel (44) in der Richtung (D) nach der Dicke (E) des Paneels eingestellt wird, wenn der Rahmen (40) eingepasst wird und bevor die Bestandteile miteinander verbunden werden, wobei die Außenseite (56) des ersten Bestandteils (62) bündig mit der Außenfläche (46) des Paneels liegt oder zu der Innenseite (70) des Paneels (44) hin eingelassen ist.

7. Verfahren zum Einpassen eines Rahmens (40) nach dem vorhergehenden Anspruch, **dadurch gekennzeichnet, dass** es Vorkehrungen trifft, damit die Position des ersten Bestandteils (62) in Bezug auf den zweiten Bestandteil (64) entsprechend dem gewünschten Ausmaß eingestellt wird, in dem die Absperreinrichtung (48) in Bezug auf die Außenfläche (46) des Paneels (44) einzulassen ist.

8. Verfahren zum Einpassen eines Rahmens (40) nach dem vorhergehenden Anspruch, **dadurch gekennzeichnet, dass** es Vorkehrungen trifft, damit der zweite Bestandteil (64) an dem Paneel (44) befestigt wird, und danach, damit der erste Bestandteil (62) in Bezug auf den zweiten Bestandteil entsprechend dem gewünschten Ausmaß positioniert wird, in dem die Absperreinrichtung (48) einzulassen ist, bevor die Befestigungsmittel, welche die Bestandteile (62, 64) an ihren jeweiligen Wänden (72, 74) miteinander verbinden, zur Anwendung gebracht werden.

9. Verfahren zum Einpassen eines Rahmens (40) nach dem vorhergehenden Anspruch, **dadurch gekennzeichnet, dass** die Befestigungsmittel zum Einsatz gebracht werden durch gemeinsames Bohren durch die zwei Bestandteile (62, 64) an ihren jeweiligen Wänden (72, 74), wenn der Rahmen an der Öffnung eingepasst wird, wobei die erlangten Bohrungen Befestigungsmittel, wie beispielsweise Schrauben oder Nieten, aufnehmen.

## Revendications

1. Encadrement (40) pour une ouverture (42) réalisée dans un panneau (44) d'un aéronef, notamment un panneau de fuselage dudit aéronef, ledit panneau comprenant au moins une surface extérieure (46), ledit encadrement pouvant être fixé audit panneau, formant une interface pour ajuster un dispositif de fermeture (48), et comprenant au moins une lèvre (54) s'étendant vers le centre de l'ouverture (42), ladite lèvre supportant le dispositif de fermeture (48) et ayant au moins une face externe (56) interposée entre la surface extérieure (46) du panneau et ledit dispositif de fermeture, et l'encadrement (40) étant fabriqué d'au moins deux composants indépendants réunis l'un à l'autre, un premier composant (62) comprenant ladite lèvre (54) et un deuxième composant (64) pouvant être fixé au panneau, **caractérisé en ce que** l'un des composants (62, 64) est divisé transversalement le long de toute sa section.

2. Encadrement (40) pour une ouverture (42) réalisée dans un panneau (44) d'un aéronef selon la revendication 1, **caractérisé en ce qu'**avant que les deux composants (62, 64) de l'encadrement ne soient réunis l'un à l'autre, ledit premier composant (62) est ajusté de telle sorte qu'il puisse coulisser par rapport au deuxième composant (64).

3. Encadrement (40) pour une ouverture (42) réalisée dans un panneau (44) d'un aéronef selon la revendication 2, **caractérisé en ce que** le premier composant (62) comprend au moins une surface de glissement (63) et le deuxième composant (64) comprend au moins une surface de glissement (65), lesdites surfaces de glissement (63, 65) étant capables de glisser l'une contre l'autre dans une direction (D) perpendiculaire au panneau.

4. Encadrement (40) pour une ouverture (42) réalisée dans un panneau (44) d'un aéronef selon la revendication 3, **caractérisé en ce que**, avec le premier composant (62) comprenant au moins une paroi (72) s'étendant dans la direction (D) et vers l'intérieur (70) du panneau, avec le deuxième composant (64) comprenant au moins une paroi (74) s'étendant dans la direction (D) et vers l'intérieur (70) du panneau, et avec la paroi (72) étant montée à l'intérieur de la paroi (74), la face externe (76) de la paroi (72) correspond à la surface de glissement (63), et la face interne (78) de la paroi (74) correspond à la surface de glissement (65).

5. Encadrement (40) pour une ouverture (42) réalisée dans un panneau (44) d'un aéronef selon la revendication 4, **caractérisé en ce que** la face interne (78) de la paroi (74) se situe dans le prolongement du bord (68) de l'ouverture (42) ou s'étend au-delà de celui-ci.

6. Procédé pour ajuster un encadrement (40) selon l'une quelconque des revendications précédentes, **caractérisé en ce qu'**il permet l'ajustement de la position du premier composant (62) par rapport au deuxième composant (64) et au panneau (44) dans la direction (D) en fonction de l'épaisseur (E) du panneau lorsque l'encadrement (40) est ajusté et avant que lesdits composants soient réunis l'un à l'autre, la face externe (56) du premier composant (62) étant en affleurement avec la surface extérieure (46) du panneau ou étant renfoncée vers l'intérieur (70) du panneau (44).

7. Procédé pour ajuster un encadrement (40) selon la revendication précédente, **caractérisé en ce qu'**il permet l'ajustement de la position du premier composant (62) par rapport au deuxième composant (64) en fonction de l'étendue souhaitée suivant laquelle le dispositif de fermeture (48) doit être réglé par rapport à la surface extérieure (46) du panneau (44).

8. Procédé pour ajuster un encadrement (40) selon la revendication précédente, **caractérisé en ce qu'**il permet au deuxième composant (64) d'être fixé au panneau (44) puis au premier composant (62) d'être positionné par rapport au deuxième composant en fonction de l'étendue souhaitée suivant laquelle le dispositif de fermeture (48) doit être renfoncé, avant que les moyens de fixation qui réunissent lesdits composants (62, 64) ensemble au niveau de leurs parois respectives (72, 74) soient utilisés.

9. Procédé pour ajuster un encadrement (40) selon la revendication précédente, **caractérisé en ce que** lesdits moyens de fixation sont mis en fonctionnement en perçant à travers les deux composants (62, 64) ensemble au niveau de leurs parois respectives (72, 74) lors de l'ajustement de l'encadrement sur l'ouverture, les perçages obtenus acceptant des moyens de fixation tels que des vis ou des rivets.
